(19) Europäisches Patentamt
European Patent Office
Office européen des brevets

(11) EP 0 586 379 B1

(12) **EUROPEAN PATENT SPECIFICATION**

(45) Date of publication and mention of the grant of the patent:
**20.05.1998 Bulletin 1998/21**

(21) Application number: **92904325.5**

(22) Date of filing: **31.01.1992**

(51) Int Cl.[6]: **C08F 2/38**, C07C 327/26

(86) International application number:
**PCT/AU92/00029**

(87) International publication number:
**WO 92/13903 (20.08.1992 Gazette 1992/22)**

(54) **POLYMERISATION REGULATION**

POLYMERISATIONSREGELUNG

REGULATION DE LA POLYMERISATION

(84) Designated Contracting States:
**AT BE CH DE DK ES FR GB GR IT LI LU MC NL SE**

(30) Priority: **06.02.1991 AU 4465/91**

(43) Date of publication of application:
**16.03.1994 Bulletin 1994/11**

(73) Proprietor: **COMMONWEALTH SCIENTIFIC AND INDUSTRIAL RESEARCH ORGANISATION**
**Campbell, ACT 2601 (AU)**

(72) Inventors:
- **MEIJS, Gordon, Francis**
  **Murrumbeena, VIC 3163 (AU)**
- **RIZZARDO, Ezio**
  **Wheelers Hill, VIC 3150 (AU)**

(74) Representative: **Kyle, Diana**
**Elkington and Fife**
**Prospect House**
**8 Pembroke Road**
**Sevenoaks, Kent TN13 1XR (GB)**

(56) References cited:
**EP-A- 0 407 059**
**WO-A-89/10371**
**US-A- 2 396 997**
**US-A- 3 838 140**
**US-A- 4 054 731**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 586 379 B1

Printed by Jouve, 75001 PARIS (FR)

## Description

The invention relates to processes for radical-initiated polymerisation of unsaturated species and for the regulation of molecular weight and end-group functionality of the polymeric products produced from such processes. Polymers of limited molecular weights, or oligomers, are useful as precursors in the manufacture of other polymeric materials and as additives or components of formulations for plastics, elastomerics, and surface coating compositions, as well as being useful in their own right in many applications. For example, low molecular weight polymers are often required for ease of processing. End-functional polymers are important as building-blocks for advanced copolymers. If of sufficiently low molecular weight, end functional polymers often display useful surface active or compatibilising properties.

In conventional polymerisation practice, the manufacture of low molecular weight polymers requires the use of an initiator and a chain transfer agent. The initiator acts as a free radical source, whereas the chain transfer agent or regulator controls the molecular weight of the polymer molecule by reacting with the propagating polymer radical to terminate its growth. The chain transfer agent then causes the initiation of a new polymer chain thus transferring the growth process from one discrete polymer molecule to another discrete polymer molecule. At least a part of the chain transfer agent is incorporated into the polymer molecule and is thereby consumed in the process.

The chain transfer agents most commonly used are alkanethiols which possess an objectionable odour, lead to a wide distribution of molecular weights in batch polymerisations with certain monomers, do not allow the production of di-end functional polymers and have limitations as to the types of functional groups that can be installed at the end of the polymer chain. There is also little scope with thiols for the chain transfer constant to be optimised for a particular polymerisation. In many polymerisations with thiols, the chain transfer constant, a measure of the effectiveness of the polymerisation regulator, departs significantly from the ideal of 1.0 that is the optimum for batch polymerisations at moderate to high conversions. The desirability of chain transfer constants close to 1.0 is reviewed by an article by T. Corner in ***Advances in Polymer Science,*** volume 62, p. 95 (1985). WO 88/04304 (International Patent Application PCT/AU87/00412) and WO/91/06535 (Australian Provisional Patent Application PJ7146/89) disclose polymerisation processes employing regulators that help overcome many of the disadvantages of thiols, particularly in relation to chain transfer constant and, in part, provide polymerisation processes that give alternative end groups. They also allow incorporation of a wider variety of useful functional groups at the ends of polymer chains.

The use of disulfides as chain transfer agents in polymerisation systems is known. For example US Patent No 4,054,731 describes polymerisation of chloroprene optionally in combination with copolymerisable monomers using xanthogen disulfide as a chain transfer agent. US Patent No 3,838,140 also describes polymerising a monomer composition comprising chloroprene in the presence of a dialkoxyanthate disulfide.

EPA 407059 discloses a process for producing a copolymer latex comprising emulsion-polymerising a conjugated diene, an ethylenically unsaturated carboxylic acid and another ethylenically unsaturated compound in the presence of a chain transfer agent selected from a group including dimethylxanthogen disulfide, diethylxanthogen disulfide and thiuram disulfide.

The present invention seeks to overcome the disadvantages of polymerisations regulated with thiols by using alternative polymerisation regulators. These regulators have good stability and shelf life while maintaining many of the advantages over thiols. In the majority of cases, the materials that are part of the present process present a different range of chain transfer activities, allowing more opportunity for an optimal process to be selected for a given polymerisation system of monomer and polymerisation conditions. The chain transfer constant that a given regulator possesses is an important consideration in selecting the optimum process for producing low molecular weight polymers.

The present invention provides a process for the production of low molecular weight polymers by free radical polymerisation of one or more unsaturated monomers in the presence of a chain transfer agent characterised in that the chain transfer agent comprises one or more compounds of the general formula I

$$R^1 - \overset{\overset{\displaystyle S}{\|}}{C} - Z - R^2 \qquad (I)$$

wherein

$R^1$ is a hydrogen atom, an alkyl group, or a group capable of activating the vinylic carbon towards free radical addition;

$R^2$ represents an optionally substituted alkyl, optionally substituted alkenyl, optionally substituted alkynyl, or optionally substituted saturated, unsaturated or aromatic carbocyclic or heterocyclic ring; and

Z represents an oxygen, phosphorus or nitrogen atom bound to another atom or group of atoms in order to satisfy its valency.

Suitable groups for $R^1$ are optionally substituted phenyl or other optionally substituted aromatic groups, alkoxycarbonyl or aryloxycarbonyl (-COOR), carboxy (-COOH), acyloxy ($-O_2CR$), carbamoyl ($-CONR_2$), and cyano (-CN), where R is an alkyl or aryl group.

Optional substituents for $R^1$ and/or $R^2$ in formula I are either reactive or nonreactive groups. $R^1$ and/or $R^2$ may be one or more "reactive substituent groups" which are groups which do not take part in the actual lowering of the molecular weight but are installed at the ends of the polymer chains and may undergo subsequent chemical reaction. The low molecular weight polymer containing such a reactive group or groups can thereby undergo further chemical transformation, such as being joined with another polymer chain. Suitable reactive substituents include hydroxy (-OH), amino ($-NH_2$), halogen, allyl, cyano, epoxy, and carboxylic acid and its derivatives, such as ester groups (-COOAlkyl). "Nonreactive substituent groups" may be any groups which are not deleterious to the polymerisation reaction or product, for example, alkoxy (-OAlkyl) or alkyl groups.

Substituted rings may have their reactive substituent groups directly attached to the ring or indirectly attached by means of a methylene group or other side chain.

Alkyl groups referred to in this specification may contain from 1 to 32 carbon atoms. Alkenyl and alkynyl groups may contain from 2 to 32 carbon atoms. Saturated, unsaturated, or aromatic carbocyclic or heterocyclic rings may contain from 3 to 14 atoms.

The process of this invention may be adopted by the users of conventional processes using thiols with little change to reaction conditions other than the substitution of the appropnate quantity of a compound of general formula I for the thiol. The proportion of the compound of general formula I used may be in the range of 0.01 to 30 mole percent based on total monomer, with a preferred range 0.1 to 5 mole percent. The process may be operated at any of the reaction conditions appropriate to free radical polymerisation, i.e. temperatures from -100°C to 400°C and pressures from below 0.1 to 304 MPa (below atmospheric to 3000 atmospheres).

Bulk, solution, emulsion, suspension or other conventional polymerisation modes may be used. Any unsaturated monomers susceptible to free radical polymerisation may be used although it should be noted that the chain transfer constant will vary with the monomer used. Suitable unsaturated monomers include acrylic esters, methacrylic ester, acrylonitrile, vinyl halides, vinyl esters, vinyl aromatics, unsaturated or poly unsaturated hydrocarbons, or mixtures of any two or more of these. For example, the process is applicable to the manufacture of synthetic rubbers, and other polymer formulations where reduced molecular weight aids processing and improves properties. The process can also be used to produce low molecular weight polymers and oligomers for a variety of applications such as high-solids surface coatings, paints, and adhesives.

Compounds of general formula I are readily prepared and, unlike the lower molecular weight thiols, they do not possess an objectionable odour. The compounds used in the process of this invention display an unexpected high activity in controlling molecular weight in polymerisation reactions and have chain transfer constants that may be superior to those of thiols, particularly with styrene and acrylates. Their activity is such that their chain transfer constants can approach the optimum of 1.0 for batch polymerisations and this activity is not as highly dependent as that of thiols on the structure of the propagating radical.

A feature of the process of this invention is that, unlike processes described in many of the examples of WO 88/04304 (International Patent Application PCT/AU87/00412), it produces polymer chains that do not contain terminal unsaturation. In addition, those chain transfer agents described in WO 88/04304 (International Patent Application PCT/AU87/00412) that specifically do not introduce terminal unsaturation (for example, α-benzyloxystyrene and derivatives) have less satisfactory chain transfer constants and lower shelf life than the compounds of formula I.

An additional, unique feature of the process is that the resulting polymers can be hydrolysed to give a terminal thiol group. Such hydrolysis cleaves off the residue of the chain transfer agent containing $R^1$ and therefore there is no need for $R^1$ to contain a functional substituent for the production of thiol terminated polymers. If $R^2$, however, contains a functional substituent, a di-end functional polymer will be the product of the process (after the hydrolysis step) and one of the end groups will be a thiol group. Thiol terminated polymers have application as odour-free polymeric chain transfer agents and as building blocks for the preparation of block and graft copolymers.

The end functional polymers produced by any of the aspects of the process described above can be converted into polymers with different end functionality by chemical reaction as is well known in the art. For example, hydroxy terminated polymers can be converted into macromonomers by reaction with methacryloyl chloride. These macromonomers are useful materials for the preparation of graft copolymers by free radical copolymerisation.

The materials of formula I that are employed in the process of this invention may be prepared by reaction of the corresponding *O*-ester with Lawesson's reagent or by treatment of alcohols or alkoxides with thiobenzoyl chloride or

the sodium salt of (thiobenzylthio)acetic acid. The reaction of iminoesters with hydrogen sulfide has also been reported to give thionoesters.

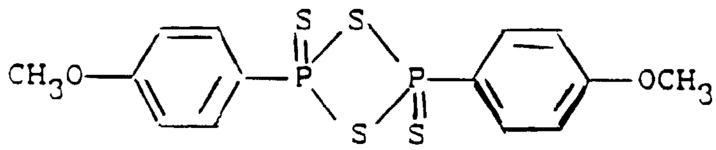

**Lawesson's Reagent**

The following illustrates some of the methods used to prepare examples of the compounds used in the process.

*Benzyl thionobenzoate:*

*By method A [Lawesson's reagent].* Benzyl benzoate (2.1 g) was heated at 140 °C for 24 h with Lawesson's Reagent (4.9 g) in anhydrous xylene (10 ml). After removal of the solvent and subjection of the mixture to chromatography on silica gel and recrystallization from pentane at low temperature, benzyl thionobenzoate was obtained in 67% yield. $^1$H NMR ($CDCl_3$): $\delta$ = 5.64 (s, 2H), 7.3-8.2 (m. 10H).

By *method B [Thionobenzoyl chloride route].* Thionyl chloride (71 g) was added dropwise to a solution of dithiobenzoic acid (47 g) in anhydrous ether (44 ml). After 7 h of stirring at ambient temperature, the ether and excess thionyl chloride were removed under reduced pressure. The residue was then distilled twice to afford the thioacid chloride (61%) : b.p. 54-64°C [1.3 Pa (0.01 mmHg)]. Triethylamine (2.03 g) was added in one portion to a solution of the thioacid chloride (3.13 g) and benzyl alcohol (2.16 g) in dry acetone (40 ml) under nitrogen with vigorous stirring. The stirring was continued for 15 h at ambient temperature. The mixture was then poured into water and extracted with ether. The extracts were washed and dried (MgSO4) and the residue was subjected to chromatography on silica gel (eluent: hexane) to give a viscous yellow oil (3.0 g) which was crystallised from pentane to afford benzyl thionobenzoate (2.4 g, 53%): m.p. 39-40 °C.

*By method C [(Thiobenzylthio)acetic acid route].* Phenylmagnesium bromide was prepared by adding bromobenzene (20 g) in ether (100 ml) dropwise under nitrogen and reflux to a stirred mixture of magnesium turnings (3.2 g) in anhydrous ether (50 ml). After 30 minutes boiling under reflux, the mixture was cooled in ice and carbon disulfide (12 ml) was added dropwise. The mixture was allowed to warm gradually to 20°C and stirred for a further 15 h. After this period, ice (130 g) was cautiously added, and the organic layer was separated. The sodium salt of chloroacetic acid (12 g) was added to the aqueous phase and the mixture was allowed to stand for 24 h. After this period, it was brought to pH 1 with hydrochloric acid and extracted with ether. The ether extracts were washed with water (x 3), dried ($CaCl_2$), and the solvent was removed to afford a residue that was recrystallised from benzene to give the acid derivative (7.9 g): m.p. 125-126°C). A portion (1.06 g) was dissolved in dry tetrahydrofuran (125 ml) and sodium hydride (0.48 g) was then added. After the effervescence had ceased, imidazole (0.68 g) was added and the mixture was refluxed for 5 minutes. Benzyl alcohol was then added and the mixture was refluxed for a further 5 min. It was then cooled, poured into water, and extracted with ether. The extracts were washed three times with water, dried and the solvent was removed to give benzyl thionobenzoate (0.72 g), which was further purified by flash chromatography on silica gel (eluent: b.p. 40-60°C petroleum spirit) and recrystallization from pentane. Yield: 4 g. m.p. 38.39°C.

*(4-Methoxycarbonylbenzyl) thionobenzoate: Method C was* used to prepare this compound in low yield (ca. 5% overall) from bromobenzene and methyl (4-hydroxymethyl)benzoate. The thionoester was recrystallised from dichloromethane/hexane: m.p. 90-91°C. $^1$H NMR ($CDCl_3$): $\delta$ = 3.92 (s, 3H), 5.74 (s, 2H), 7.2-7.7 (m, SH), 7.9-8.3 (m, 4H). MS ($CH^4$): m/z 287 ($MH^+$, 25%),149 (32%).

*Benzyl 4-methoxythionobenzoate*: This compound was prepared from 4-bromoanisole and benzyl alcohol in 5% overall yield by *Method C.* It was recrystallised from dichloromethane/hexane: m.p. 68-69°C. $^1$H NMR ($CDCl_3$): $\delta$ = 3.67 (s, 3H), 5.60 (s, 2H), 6.73 (d, J = 9 Hz, 2H), 7.1-7.6 (m, 5H), 8.13 (d, J = 9 Hz, 2H). MS ($CH^4$): m/z 259 ($MH^+$, 10%),135 (100%), 107 (10%), 91 (45%).

*(4-Methoxycarbonylbenzyl) 4-methoxythionobenzoate: Method C* was used to prepare this compound in 11% overall yield from 4-bromoanisole and methyl (4-hydroxymethyl)benzoate. The crude product was subjected to flash chromatography (eluent: dichloromethane) and recrystallised from dichloromethane/hexane: m.p. 83-85°C. $^1$H NMR ($CDCl_3$): $\delta$ = 3.83 (s, 3H), 3.93 (s, 3H), 5.75 (s, 2H), 6.83 (d, J = 7.5 Hz, 2H), 7.50 (d, J = 7.5 Hz, 2H), 7.9-8.3 (m, 4H). MS ($CH^4$): m/z 317 ($MH^+$, 3%), 149 (18%), 135 (100%). Accurate mass m/z 317.0836. $C_{17}H_{17}O_4S$ requires m/z

317.0847.

*(4-Ethoxycarbonylbenzyl) 4-methoxythionobenzoate:* This compound was prepared from 4-bromoanisole and ethyl (4-hydroxymethyl)benzoate by *Method C*. The overall yield was 18% and recrystallization from dichloromethane/ hexane was used for purification. m.p. 75.77°C. $^1$H NMR ($CDCl_3$): δ = 1.40 (t, J = 7 Hz, 3H), 3.83 (s, 3H), 4.37 (q, J = 7 Hz, 2H), 5.73 (s, 2H), 6.80 (d, J = 7.5 Hz, 2H), 7.50 (d, J = 7.5 Hz, 2H), 8.0-8.4 (m, 4H). MS ($CH^4$): m/z 331 ($MH^+$, 40%),163 (40%),135 (100%).

*4-(Hydroxymethyl)benzyl thionobenzoate:* This compound was prepared using *Method B* in 26% yield from thiobenzoyl chloride and 1,4-benzenedimethanol. After recrystallization from hexane, yellow needles of the thionoester were obtained. m.p. 80-80.5°C. $^1$H NMR ($CDCl_3$): δ = 1.67 (s, 1H), 4.68 (s, 2H), 5.68 (s, 2H), 7.40 (m, 7H), 8.17 (d, J = 6 Hz, 2H). MS (EI): m/z 257 ($M^+$-1, 12%), 241 (90%), 121 (100%). Accurate mass m/z 258.0732. $C_{15}H_{14}O_2S$ requires m/z 258.0714.

**EXAMPLE 1**

*Preparation of Low Molecular Weight Polystyrene with Benzyl Thionobenzoate*

Azobisisobutyronitrile (35 mg) was dissolved in freshly distilled styrene (25 ml). Aliquots (5.0 ml) were removed and added to ampoules containing the amount of benzyl thionobenzoate shown below in Table 1. The mixtures were polymerised at 60°C for 1 h in the absence of oxygen. The contents of the ampoule were then poured into methanol and the precipitated polymer was collected and dried *in vacuo* overnight. A small portion was examined by gel permeation chromatography (GPC) using a Waters Instrument (trade mark) connected to six μ-Styragel columns ($10^5$, $10^4$, $10^3$, $10^2$, 50 and 10 nm ($10^6$, $10^5$, $10^4$, $10^3$, 500 and 100 Å) pore size). Tetrahydrofuran was used as eluent at a flow rate of 1 ml/min and the system was calibrated using narrow distribution polystyrene standards (Waters). The results appear in Table 1.

Table 1

| Amount of benzyl thionobenzoate added | Conversion % | $\overline{M}_n$ |
|---|---|---|
| 81 mg | 2.7 | 11400 |
| 41 mg | 2.9 | 20800 |
| 21 mg | 3.0 | 37600 |
| 0 mg | 3.2 | 124000 |

The chain transfer constant ($C_x$), calculated from these data, was 1.0 which compares favourably with that from n-butanethiol ($C_x$ = 21-25). These results show that the compound is an efficient chain transfer agent and that the process produces polymers of low molecular weight in a controlled manner.

**EXAMPLE 2**

*Preparation of Low Molecular Weight Poly(methyl acrylate) with Benzyl Thionobenzoate*

Azobisisobutyronitrile (9 mg) was dissolved in freshly distilled methyl acrylate (25 ml). Aliquots (2.0 ml) were removed and added to ampoules containing thiophen-free benzene (8 ml) and the amount of benzyl thionobenzoate shown below in Table 2. The mixtures were polymerised at 60°C for 1 h in the absence of oxygen. The volatiles were then removed and the polymers were dried *in vacuo* to constant weight and then examined as before. The results appear in Table 2.

Table 2

| Amount of benzyl thionobenzoate added | Conversion % | $\overline{M}_n$ * |
|---|---|---|
| 50 mg | 3.8 | 9020 |
| 26 mg | 6.0 | 17700 |
| 12 mg | 9.2 | 35600 |
| 0 mg | 16 | 473000 |

* Polystyrene-equivalent number average molecular weight, obtained by GPC.

The chain transfer constant ($C_x$), calculated from these data, was 1.2, which compares favourably with that from

n-butanethiol ($C_x$= 1.7).

**EXAMPLE 3**

*Prepartion of Low Molecular Weight Poly(vinyl acetate) with Benzyl Thionobenzoate*

Azobisisobutyronitrile (16 mg) was dissolved in freshly distilled vinyl acetate (100 ml). Aliquots (10.0 ml) were removed and added to ampoules containing the amount of benzyl thionobenzoate shown below in Table 3. The mixtures were polymerised at 60°C for 1 h in the absence of oxygen. The volatiles were then removed and the polymers were dried *in vacuo* to constant weight and then examined as before. The results appear in Table 3.

Table 3

| Amount of benzyl thionobenzoate added | $\overline{M}_n$* |
|---|---|
| 2.2 mg | 1900 |
| 0 | 253000 |

* Polystyrene-equivalent number average molecular weight, obtained by GPC.

The chain transfer constant ($C_x$), calculated from these data, was > 20. These results show that the compound acts as a very active regulator in polymerisation of vinyl acetate.

**EXAMPLE 4**

*Preparation of Low Molecular Weight Polystyrene with (4-Methoxycarbonylbenzyl) Thionobenzoate*

Samples of polystyrene were prepared on the same scale and in the manner of example 1. The amount of (4-methoxycarbonylbenzyl) thionobenzoate added and the results of the polymerisation are shown in Table 4.

Table 4

| Amount of (4-methoxycarbonylbenzyl) thionobenzoate added | $\overline{M}_n$ |
|---|---|
| 80 mg | 23000 |
| 40 mg | 41900 |
| 20 mg | 66300 |
| 0 mg | 142000 |

The chain transfer constant ($C_x$), calculated from these data, was 0.59. A sample of low molecular weight polystyrene ($\overline{M}_n$ = 4570) prepared with (4-methoxycarbonylbenzyl) thionobenzoate was examined by $^1$H NMR spectroscopy and showed signals at $\delta$ = 3.83 indicative of the presence of methyl ester groups. Integration of the spectrum and comparison with the integral of the aromatic styrene signal showed there to be an end group functionality of 0.9-1.0. This experiment show that the process can be used to prepare end functional polymers.

**EXAMPLE 5**

*Preparation of Low Molecular Weight Poly(methyl acrylate) with (4-Methoxycarbonylbenzyl) Thionobenzoate*

Samples of poly(methyl acrylate) were prepared according to the directions given in Example 2, except that (4-methoxycarbonylbenzyl) thionobenzoate was used rather than benzyl thionobenzoate. The amount of (4-methoxycarbonylbenzyl) thionobenzoate added and the results of the polymerisation are shown in Table 5.

Table 5

| Amount of (4-methoxycarbonylbenzyl) thionobenzoate added | $\overline{M}_n$ * |
|---|---|
| 50 mg | 7700 |
| 26 mg | 14300 |
| 12 mg | 28300 |

* Polystyrene-equivalent number average molecular weight, obtained by GPC

Table 5 (continued)

| Amount of (4-methoxycarbonylbenzyl) thionobenzoate added | $\overline{M}_n$ * |
|---|---|
| 0 mg | 772000 |

* Polystyrene-equivalent number average molecular weight, obtained by GPC

The chain transfer constant ($C_x$), calculated from these data, was 1.4, which compares favourably with that from n-butanethiol ($C_x$= 1.7).

**EXAMPLE 6**

*Preparation of Low Molecular Weight Polystyrene with Benzyl 4-Methoxy(thionobenzoate)*

Samples of polystyrene were prepared on the same scale and in the manner of example 1. The amount of benzyl 4-methoxy(thionobenzoate) added and the results of the polymerisation are shown in Table 6.

Table 6

| Amount of benzyl 4-methoxy(thionobenzoate) added | $\overline{M}_n$ |
|---|---|
| 80 mg | 65100 |
| 40 mg | 93500 |
| 20 mg | 113000 |
| 0 mg | 145000 |

The chain transfer constant ($C_x$), calculated from these data, was 0.12.

**EXAMPLE 7**

*Preparation of Low Molecular Weight Poly(methyl acrylate) with Benzyl 4-Methoxy(thionobenzoate)*

Samples of poly(methyl acrylate) were prepared according to the directions given in Example 2, except that benzyl 4-methoxy(thionobenzoate) was used rather than benzyl thionobenzoate. The amount of benzyl 4-methoxy-(thionobenzoate) added and the results of the polymerisation are shown in Table 7.

Table 7

| Amount of benzyl 4-methoxy(thionobenzoate) added | $\overline{M}_n$ * |
|---|---|
| 50 mg | 10700 |
| 26 mg | 18600 |
| 13 mg | 42600 |
| 0 mg | 394000 |

* Polystyrene-equivalent number average molecular weight, obtained by GPC

The chain transfer constant ($C_x$), calculated from these data, was 1.1, which compares favourably with that from n-butanethiol ($C_x$= 1.7).

**EXAMPLE 8**

*Preparation of Low Molecular Weight Polystyrene with 4-(Methoxycarbonyl)benzyl 4-Methoxy(thionobenzoate)*

Samples of polystyrene were prepared on the same scale and in the manner of example 1. The amount of 4-(methoxycarbonyl)benzyl 4-methoxy(thionobenzoate) added and the results of the polymerisation are shown in Table 8.

Table 8

| Amount of 4-(methoxycarbonyl)benzyl 4-methoxy(thionobenzoate) added | $\overline{M}_n$ |
|---|---|
| 81 mg | 48400 |

Table 8 (continued)

| Amount of 4-(methoxycarbonyl)benzyl 4-methoxy(thionobenzoate) added | $\overline{M}_n$ |
|---|---|
| 40 mg | 86000 |
| 20 mg | 105300 |
| 0 mg | 150000 |

The chain transfer constant ($C_x$), calculated from these data, was 0.25. The total average functionality (methoxy and methoxycarbonyl groups) calculated by $^1H$ NMR on a sample of polystyrene of $\overline{M}n$ = 13300 (prepared with 4-(methoxycarbonyl)benzyl 4-methoxy(thionobenzoate) was 2.1, which shows that 4-methoxycarbonyl)benzyl 4-methoxy(thionobenzoate) is efficient in introducing functional groups at the termini of polymer chains and that this type of chain transfer agent can be used to prepare end-functional polymers.

**EXAMPLE 9**

*Preparation of Low Molecular Weight Poly(methyl acrylate) with 4-(Methoxycarbonyl)benzyl 4-Methoxy (thionobenzoate)*

Samples of poly(methyl acrylate) were prepared according to the directions given in Example 2, except that 4-(methoxycarbonyl)benzyl 4-methoxy(thionobenzoate) was used rather than benzyl thionobenzoate. The amount of 4-(methoxycarbonyl)benzyl 4-methoxy(thionobenzoate) added and the results of the polymerisation are shown in Table 9.

Table 9

| Amount of 4-(methoxycarbonyl)benzyl 4-methoxy(thionobenzoate) added | $\overline{M}_n$ * |
|---|---|
| 50 mg | 10700 |
| 26 mg | 18600 |
| 13 mg | 42600 |
| 0 mg | 394000 |

* Polystyrene-equivalent number average molecular weight, obtained by GPC

The chain transfer constant ($C_x$), calculated from these data, was 1.1, which compares favourably with that from n-butanethiol ($C_x$= 1.7).

**EXAMPLE 10**

*Preparation* of *Low Molecular Weight Polystyrene with 4-(Ethoxycarbonyl)benzyl 4-Methoxy(thionobenzoate)*

Samples of polystyrene were prepared on the same scale and in the manner of Example 1. The amount of 4-(ethoxycarbonyl)benzyl 4-methoxy(thionobenzoate) added and the results of the polymerisation are shown in Table 10.

Table 10

| Amount of 4-(ethoxycarbonyl)benzyl 4-methoxy(thionobenzoate) added | $\overline{M}_n$ |
|---|---|
| 616 mg | 13500 |
| 0 mg | 150000 |

The presence of ethoxycarbonyl and methoxy end groups in the lower molecular weight sample of polystyrene was shown by signals in the $^1H$ NMR spectrum at $\delta$ = 4.28 and 3.83, respectively.

**EXAMPLE 11**

*Preparation of Low Molecular Weight Polystyrene with 4-(hydroxymemthyl)benzyl thionobenzoate*

Samples of polystyrene were prepared on the same scale and in the manner of example 1. The amount of 4-(hydroymethyl)benzyl thionobenzoate added and the results of the polymerisation are shown in Table 11.

Table 11

| Amount of 4(hydroxymethyl)benzyl thionobenzoate added | $\overline{M}_n$ |
|---|---|
| 81 mg | 25600 |
| 40 mg | 43900 |
| 20 mg | 59500 |
| 0 mg | 113000 |

The chain transfer constant was 0.43. The presence of the end group shown below in a polymer of $\overline{M}n$ = 6810, prepared with 4-(hydroxymethyl)benzyl thionobenzoate, was confirmed by a broad signal in the $^1H$ NMR spectrum at $\delta$ = 4.4-4.7 (due to the benzyl methylene hydrogens) and an infrared absorption at 3415 $cm^{-1}$.

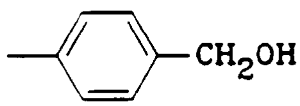

End group of polymer prepared with 4-(hydroxymethyl)benzyl thionobenzoate

After treatment with *t*-butyldimethylsilyl chloride and imidazole, this polymer showed signals at $\delta$ = 0.08 in the $^1H$ NMR spectrum due to the methyls of a *t*-butyldimethylsilyl ether group. The formation of this silyl ether further confirms the presence of a hydroxy end group.

**Claims**

**1.** A process for the production of low molecular weight polymers by free radical polymerisation of one or more unsaturated monomers in the presence of a chain transfer agent, characterised in that the chain transfer agent comprises one or more compounds of the general formula I

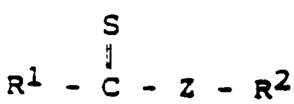

(I)

wherein

$R^1$ is a hydrogen atom an alkyl group, or a group capable of activating the vinylic carbon towards free radical addition;

$R^2$ represents an optionally substituted alkyl, optionally substituted alkenyl, optionally substituted alkynyl, or optionally substituted saturated, unsaturated or aromatic carbocyclic or heterocyclic ring; and

Z represents an oxygen, phosphorus or nitrogen atom bound to another atom or group of atoms in order to satisfy its valency.

**2.** A process as claimed in Claim 1, characterised in that $R^1$ is a substituted phenyl or other optionally substituted aromatic group,or an alkoxycarbonyl or aryloxycarbonyl, carboxy, acyloxy, carbamoyl, or cyano group.

**3.** A process as claimed in Claim 1 or Claim 2, characterised in that $R^1$ and/or $R^2$ in formula I have one or more reactive substituent groups which do not take part in the actual lowering of the molecular weight but are installed at the ends of the polymer chains and may undergo subsequent chemical reaction, whereby the low molecular weight polymer product containing the reactive group or groups can thereby undergo further chemical transformation.

**4.** A process as claimed in Claim 3, characterised in that the reactive substituent group is a hydroxy, amino, halogen, allyl, cyano, epoxy, or carboxylic acid group or a derivative of a carboxylic acid group.

**5.** A process as claimed in any one of the preceding Claims, characterised in that the compound of general formula I is added to be present in an amount of from 0.01 to 30 mole percent based on total monomer.

**6.** A process as claimed in any one of the preceding Claims, characterised in that the unsaturated monomer is selected from the groups consisting of acrylic esters, methacrylic esters, vinyl esters, vinyl aromatics, unsaturated or poly unsaturated hydrocarbons, or mixtures of any two or more of such monomers.

**7.** A process as claimed in any one of the preceding Claims, characterised in that the resulting polymer is hydrolysed to give a terminal thiol group.

## Patentansprüche

**1.** Verfahren zur Herstellung von Polymeren mit niedrigem Molekulargewicht durch Radikalpolymerisation von einem oder mehreren ungesättigten Monomeren in Gegenwart eines Kettenüberträgers, dadurch gekennzeichnet, daß der Kettenüberträger eine oder mehrere Verbindungen der allgemeinen Formel umfaßt:

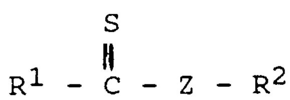

(I)

worin

$R^1$ ein Wasserstoffatom, eine Alkylgruppe oder eine Gruppe ist, die in der Lage ist, den Vinylkohlenstoff für eine Radikaladdition zu aktivieren;
$R^2$ ein wahlweise substituiertes Alkyl, ein wahlweise substituiertes Alkenyl, ein wahlweise substituiertes Alkinyl oder einen wahlweise substituierten gesättigten, ungesättigten oder aromatischen carbocyclischen oder heterocyclischen Ring darstellt; und
Z ein Sauerstoff-, Phosphor- oder Stickstoffatom darstellt, das an ein anderes Atom oder eine Gruppe von Atomen gebunden ist, um seine Valenz abzusättigen.

**2.** Verfahren nach Anspruch 1, dadurch gekennzeichnet, daß $R^1$ ein substituiertes Phenyl oder eine andere wahlweise substituierte aromatische Gruppe oder eine Alkoxycarbonyl- oder Aryloxycarbonyl, Carboxy-, Acyloxy-, Carbamoyl- oder Cyanogruppe ist.

**3.** Verfahren nach Anspruch 1 oder 2, dadurch gekennzeichnet, daß $R^1$ und/oder $R^2$ in Formel I eine oder mehrere reaktive Substituentengruppen besitzen, die nicht an der tatsächlichen Verringerung des Molekulargewichts teilnehmen, aber an den Enden der Polymerketten angebracht sind und nachfolgende chemische Reaktionen eingehen können, wodurch das Polymerprodukt mit niedrigem Molekulargewicht, das die reaktive Gruppe oder Gruppen enthält, dadurch weitere chemische Umsetzung erfahren kann.

**4.** Verfahren nach Anspruch 3, dadurch gekennzeichnet, daß die reaktive Substituentengruppe eine Hydroxy-, Amino-, Halogen-, Allyl-, Cyano-, Epoxy- oder Carbonsäuregruppe oder ein Derivat einer Carbonsäuregruppe ist.

**5.** Verfahren nach einem der vorhergehenden Ansprüche, dadurch gekennzeichnet, daß die Verbindung der allgemeinen Formel I zugegeben wird, so daß sie in einer Menge von 0,01 bis 30 Molprozent bezogen auf das gesamte Monomer vorhanden ist.

**6.** Verfahren nach einem der vorhergehenden Ansprüche, dadurch gekennzeichnet, daß das ungesättigte Monomer aus gewählt ist aus den Gruppen bestehend aus Acrylestern, Methacrylestern, Vinylestern, Vinylaromaten, ungesättigten oder mehrfach ungesättigten Kohlenwasserstoffen oder Mischungen von zwei oder mehreren solcher Monomeren.

7. Verfahren nach einem der vorhergehenden Ansprüche, dadurch gekennzeichnet, daß das erhaltene Polymer hydrolysiert wird, um eine endständige Thiolgruppe zu erhalten.

## Revendications

1. Procédé pour la production d'un polymère de faible poids moléculaire par polymérisation par radicaux libres, d'un ou plusieurs monomères insaturés en présence d'un agent de transfert de chaîne, caractérisé en ce que l'agent de transfert de chaîne comprend un ou plusieurs composés de formule générale I :

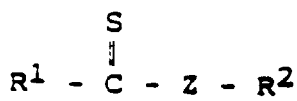

(I)

dans laquelle

$R^1$ est un atome d'hydrogène, un groupe alkyle, ou un groupe capable d'activer le carbone vinylique vis-à-vis de l'addition d'un radical libre ;
$R^2$ représente un groupe alkyle éventuellement substitué, alcényle éventuellement substitué, alcynyle éventuellement substitué, ou un cycle carbocyclique saturé, insaturé ou aromatique éventuellement substitué ou un cycle hétérocyclique ; et
Z représente un atome d'oxygène, de phosphore ou d'azote lié à un autre atome ou groupe d'atomes pour statisfaire sa valence.

2. Procédé tel que revendiqué dans la revendication 1, caractérisé en ce que $R^1$ est un groupe phényle substitué ou un autre groupe aromatique éventuellement substitué, ou un groupe alcoxycarbonyle ou aryloxycarbonyle, carboxy, acyloxy, carbamoyle, ou cyano.

3. Procédé tel que revendiqué dans la revendication 1 ou dans la revendication 2, caractérisé en ce que $R^1$ et/ou $R^2$ dans la formule (I) contiennent un ou plusieurs groupes substituants réactifs qui ne contribuent pas à l'abaissement réel du poids moléculaire mais sont présents aux extrémités des chaînes polymères et peuvent donner lieu à une réaction chimique ultérieure, par laquelle le produit polymère de faible poids moléculaire contenant le ou les groupe (s) réactif(s) peut de ce fait subir une transformation chimique supplémentaire.

4. Procédé tel que revendiqué dans la revendication 3, caractérisé en ce que le groupe substituant réactif est un groupe hydroxy, amino, un atome d'halogène, un groupe allylique, cyano, époxy ou acide carboxylique ou un dérivé d'un groupe acide carboxylique.

5. Procédé tel que revendiqué dans l'une quelconque des revendications précédentes, caractérisé en ce que le composé de formule générale (I) est ajouté de façon à être présent en une quantité allant de 0,01 à 30 mol % sur la base de la totalité du monomère.

6. Procédé tel que revendiqué dans l'une quelconque des revendications précédentes, caractérisé en ce que le monomère insaturé est choisi parmi le groupe constitué des esters acryliques, esters méthacryliques, esters vinyliques, composés aromatiques vinyliques, hydrocarbures insaturés ou polyinsaturés, ou des mélanges de deux quelconques ou davantage de ces monomères.

7. Procédé tel que revendiqué dans l'une quelconque des revendications précédentes, caractérisé en ce que le polymère résultant est hydrolysé pour conduire à un groupe thiol terminal.